Europäisches Patentamt

European Patent Office

Office européen des brevets

(19)

(11) **EP 1 280 219 A2**

(12) ## EUROPEAN PATENT APPLICATION

(43) Date of publication:
**29.01.2003 Bulletin 2003/05**

(51) Int Cl.⁷: **H01M 8/04**, H01M 8/02

(21) Application number: **02014442.4**

(22) Date of filing: **28.06.2002**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **28.06.2001 US 894939**

(71) Applicant: **FOAMEX L.P.
Linwood, Pennsylvania 19061 (US)**

(72) Inventors:
 • **Kinkelaar, Mark R.**
  Glenmoore, Pensylvania 19343 (US)
 • **Thompson, Andrew M.**
  West Chester, Pensylvania 19382 (US)

(74) Representative: **Liesegang, Eva
  Forrester & Boehmert,
  Pettenkoferstrasse 20-22
  80336 München (DE)**

(54) **Liquid fuel reservoir for fuel cells**

(57) The present invention concerns a fuel reservoir for a liquid fuel cell particularly useful for portable electronic devices in which the fuel reservoir can deliver the liquid fuel regardless of the orientation. The fuel reservoir comprises (a) a container (20) defining a cavity for holding the liquid fuel (22); (b) a wicking structure (32) positioned within the cavity and into which at least a portion of the liquid fuel wicks and from which said liquid fuel subsequently may be discharged or delivered, such as by pumping or wicking. The wicking structure is formed from a wicking material with a free rise wick height greater than at least one half of the longest dimension of the wicking structure. Among materials with such wicking capability are foams, matted, bundled or woven fibers and nonwoven fibers. The container may have a generally flat and thin profile, formed as a pouch or envelope with substantially planar top and bottom faces of flexible film material, such that the container holding the wicking structure and filled with the liquid fuel can be bent or shaped.

Fig.3.

Printed by Jouve, 75001 PARIS (FR)

## Description

This application claims the benefit of U.S. Patent Application No. 09/894,939 filed on June 23, 2001, the disclosure of which is incorporated by reference.

This invention relates to liquid fuel cells in which the liquid fuel is indirectly or preferably directly oxidized at the anode. In particular, it relates to the reservoir for holding and metering or delivering the liquid fuel to the anode of a liquid fuel cell. This invention also relates to liquid fuel feed systems for micro fuel cell reformers.

## Background of the Invention

Electrochemical fuel cells convert reactants, namely fuel and oxidants, to generate electric power and reaction products. Electrochemical fuel cells generally employ an electrolyte disposed between two electrodes (an anode and a cathode). An electrocatalyst is needed to induce the desired electrochemical reactions at the electrodes. Liquid feed solid polymer fuel cells operate in a temperature range of from about 0 °C to the boiling point of the fuel, *i.e.*, for methanol about 65 °C, and are particularly preferred for portable applications. Solid polymer fuel cells include a membrane electrode assembly ("MEA"), which comprises a solid polymer electrolyte or proton-exchange membrane, sometimes abbreviated "PEM", disposed between two electrode layers. Flow field plates for directing the reactants across one surface of each electrode are generally disposed on each side of the membrane electrode assembly.

A broad range of reactants have been contemplated for use in solid polymer fuel cells, and such reactants may be delivered in gaseous or liquid streams. The oxidant stream may be substantially pure oxygen gas, but preferably a dilute oxygen stream such as found in air, is used. The fuel stream may be substantially pure hydrogen gas, or a liquid organic fuel mixture. A fuel cell operating with a liquid fuel stream wherein the fuel is reacted electrochemically at the anode (directly oxidized) is known as a direct liquid feed fuel cell.

A direct methanol fuel cell ("DMFC") is one type of direct liquid feed fuel cell in which the fuel (liquid methanol) is directly oxidized at the anode. The following reactions occur:

Anode:

$$CH_3OH + H_2O \rightarrow 6H^+ + CO_2 + 6e^-$$

Cathode:

$$1.5O_2 + 6H^+ + 6e^- \rightarrow 3H_2O$$

The hydrogen ions ($H^+$) pass through the membrane and combine with oxygen and electrons on the cathode side producing water. Electrons ($e^-$) cannot pass through the membrane, and therefore flow from the anode to the cathode through an external circuit driving an electric load that consumes the power generated by the cell. The products of the reactions at the anode and cathode are carbon dioxide ($CO_2$) and water ($H_2O$), respectively. The open circuit voltage from a single cell is about 0.7 volts. Several direct methanol fuel cells are stacked in series to obtain greater voltage.

Other liquid fuels may be used in direct liquid fuel cells besides methanol- *i.e.*, other simple alcohols, such as ethanol, or dimethoxymethane, trimethoxymethane and formic acid. Further, the oxidant may be provided in the form of an organic fluid having a high oxygen concentration - *i.e.*, a hydrogen peroxide solution.

A direct methanol fuel cell may be operated on aqueous methanol vapor, but most commonly a liquid feed of a diluted aqueous methanol fuel solution is used. It is important to maintain separation between the anode and the cathode to prevent fuel from directly contacting the cathode and oxidizing thereon (called "cross-over"). Cross-over results in a short circuit in the cell since the electrons resulting from the oxidation reaction do not follow the current path between the electrodes. To reduce the potential for cross-over of methanol fuel from the anode to the cathode side through the MEA, very dilute solutions of methanol (for example, about 5% methanol in water) are typically used as the fuel streams in liquid feed DMFCs.

The polymer electrolyte membrane (PEM) is a solid, organic polymer, usually polyperfluorosulfonic acid, that comprises the inner core of the membrane electrode assembly (MEA). Commercially available polyperfluorosulfonic acids for use as PEM are sold by E.I. DuPont de Nemours & Company under the trademark NAFION®. The PEM must be hydrated to function properly as a proton (hydrogen ion) exchange membrane and as an electrolyte.

For efficient function of the fuel cell, the liquid fuel should be controllably metered or delivered to the anode side. The problem is particularly acute for fuel cells intended to be used in portable applications, such as in consumer electronics and cell phones, where the fuel cell orientation with respect to gravitational forces will vary. Traditional fuel tanks with an outlet at the bottom of a reservoir, and which rely on gravity feed, will cease to deliver fuel when the tank orientation changes.

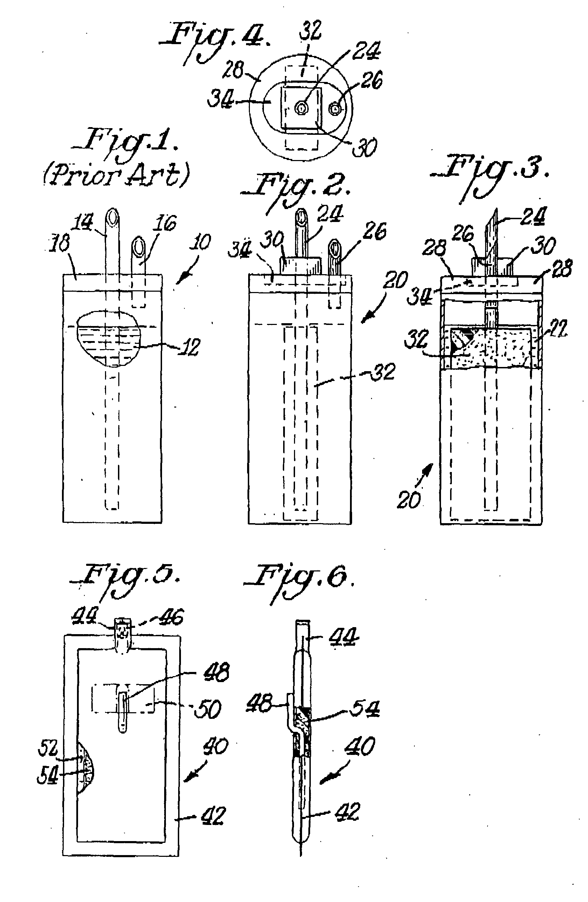

In addition, dipping tube delivery of a liquid fuel within a reservoir varies depending upon the orientation of the tube within the reservoir and the amount of fuel remaining in the reservoir. Referring to Fig. 1, a cartridge **10** holds a liquid fuel mixture **12** therein. An outlet tube **14** and an air inlet tube **16** protrude from the cartridge cover **18.** If the cartridge **10** stably remained at this orientation, the fuel mixture could be drawn out from the outlet tube **14** by pumping action, and the volume space taken by the fuel exiting the cartridge **10** filled by air entering through the air inlet tube **16.** However, if the cartridge **10** were tipped on its side, the fuel mixture could be drawn out only so long as the fuel level is above the fuel removal point of the outlet tube.

Accordingly, to facilitate use of liquid fuel cells in portable electronic devices, a liquid fuel reservoir that controllable holds and delivers fuel to a liquid fuel cell, regardless of orientation, is desired. A swappable, disposable, replaceable or recyclable liquid fuel reservoir is further desired. It is also desirable to maximize the amount of liquid fuel that the liquid fuel reservoir can hold.

## Summary of the Invention

According to one embodiment of the invention, a fuel reservoir for a liquid fuel cell comprises

(a) a container having a wall and an interior defining a cavity for holding a liquid fuel for a liquid fuel cell;
(b) a wicking structure positioned within the cavity and into which at least a portion of the liquid fuel wicks and from which the liquid fuel may be metered, discharged or delivered; and
(c) an outlet passageway through the container that communicates with the wicking structure in the cavity.

The fuel reservoir of the present invention controllably holds a liquid fuel for the liquid fuel cell. The fuel reservoir can deliver fuel to a liquid fuel cell regardless of orientation because the liquid fuel inside the container is in fluid communication with the outlet passageway without regard to the orientation of the fuel reservoir. The liquid fuel stored in the fuel reservoir can exit the container without being dependent on gravity.

Furthermore, the fuel reservoir of the present invention can be selectively attachable to or detachable from a fuel cell. The fuel reservoir can be swappable, disposable or replaceable. The fuel reservoir can also be recyclable or replenishable in that a spent fuel reservoir can be replenished with the liquid fuel via the outlet passageway or an optional liquid fuel inlet having a valve or a membrane, preferably made of fuel resistant rubber, through which the liquid fuel can be introduced into the spent fuel reservoir through a needle or the like to obtain a replenished fuel reservoir, wherein the membrane reseals the cavity after fuel introduction. In one of the embodiments of the recyclable or replenishable fuel reservoir of the present invention, the outlet passageway is fitted with a valve or sealable cap that allows the introduction of the liquid fuel into the spent fuel reservoir and prevents the liquid fuel from leaking out of the replenished fuel reservoir during storage or shipment before the next use In another embodiment of the recyclable or replenishable fuel reservoir, the fuel reservoir further comprises a liquid fuel inlet fitted with a valve or sealable cap that allows the introduction of the liquid fuel into the spent fuel reservoir and prevents the liquid fuel from leaking out of the replenished fuel reservoir.

The wicking structure not only wicks and retains liquids, but permits liquids to be controllably metered or delivered out from such structure. The wicking structure has a geometry having a longest dimension. For a cylindrically shaped wicking structure, the longest dimension may be either its height or its diameter, depending upon the relative dimensions of the cylinder. For a rectangular box-shaped wicking structure, the longest dimension may be either its height or its length or its thickness, depending upon the relative dimensions of the box. For other shapes, such as a square box-shaped reservoir, the longest dimension may be the same in multiple directions. The free rise wick height (a measure of capillarity) of the wicking structure preferably is greater than at least one half of the longest dimension. Most preferably, the free rise wick height is greater than the longest dimension.

The wicking structure may be made from foams, bundled fibers, matted fibers, woven or nonwoven fibers, or inorganic porous materials. The wicking structure can in general be a porous member made of one or more polymers resistant to the liquid fuel. Preferably, the wicking structure is constructed from a wicking material selected from polyurethane foams (preferably felted polyurethane foams, reticulated polyurethane foams or felted reticulated polyurethane foams), melamine foams, and nonwoven felts or bundles of a polyamide such as nylon, polypropylene, polyester such as polyethylene terephthalate, cellulose, polyethylene, polyacrylonitrile, and mixtures thereof. Alternatively, the wicking structure is preferably constructed from a wicking material selected from polyurethane foams (preferably felted polyurethane foams, reticulated polyurethane foams or felted reticulated polyurethane foams), melamine foams, nonwoven felts of a polyamide such as nylon, polyethylene, polypropylene, polyester, polyacrylonitrile, or mixtures thereof, bundled, matted or woven fibers of cellulose, polyester such as polyethylene terephthalate, polyethylene, polypropylene, polyacrylonitrile, and mixtures thereof. Certain inorganic porous materials, such as sintered inorganic powders of silica or alumina, can also be used as the wicking material for the wicking structure.

If a polyurethane foam is selected for the wicking structure, such foam should have a density in the range of about 0.5 to about 45, preferably about 0.5 to about 25, pounds per cubic foot, and pore sizes in the range of about 10 to about 200 pores per linear inch, more preferably a density in the range of about 0.5 to about 15 pounds per cubic foot and pore sizes in the range of about 40 to about 200 pores per linear inch, most preferably a density in the range of 0.5 to 10 pounds per cubic foot and pore sizes in the range of 75 to 200 pores per linear inch.

If a felted polyurethane foam is selected for the wicking structure, such as a felted reticulated polyurethane foam, such felted foam should have a density in the range of about 2 to about 45 pounds per cubic foot and a compression ratio in the range of about 1.1 to about 30, preferably a density in the range of about 3 to about 15 pounds per cubic foot and compression ratio in the range of about 1.1 to about 20, most preferably a density in the range of 3 to 10 pounds per cubic foot and compression ratio in the range of 2.0 to 15.

A felted foam is produced by applying heat and pressure sufficient to compress the foam to a fraction of its original thickness. For a compression ratio of 30, the foam is compressed to 1/30 of its original thickness. For a compression ratio of 2, the foam is compressed to 1/2 of its original thickness.

A reticulated foam is produced by removing the cell windows from the cellular polymer structure, leaving a network of strands and thereby increasing the fluid permeability of the resulting reticulated foam. Foams may be reticulated by *in situ*, chemical or thermal methods, all as known to those of skill in foam production.

The wicking material can be permanently or reversibly compressed to from the wicking structure. An example of a permanently compressed wicking material is a felted wicking material. An example of a reversibly compressed wicking structure is a wicking structure formed by compressing a wicking material while the wicking material is being put into the cavity of a container, so that structures such as the walls of the container help keep the wicking material in a compressed state while the wicking material is inside the container.

In a particularly preferred embodiment, the wicking structure is made with a foam with a capillarity gradient, such that the flow of the liquid fuel is directed from one region of the structure to another region of the structure as a result of the differential in capillarity between the two regions. One method for producing a foam with a capillarity gradient is to felt the foam to varying degrees of compression along its length. The direction of capillarity flow of liquid is from a lesser compressed region to a greater compressed region. Alternatively, the wicking structure may be made of a composite of individual components of foams or other materials with distinctly different capillarities. The capillarity gradient is such that the capillarity is greatest at the portion of the wicking structure proximate the outlet passageway of the fuel reservoir, and the further distal a portion of the wicking structure is from the outlet passageway the lesser will be the capillarity. With such a capillarity gradient, the liquid fuel in the wicking structure is directed to flow from a point furthest away from the outlet passageway toward the outlet passageway, aiding in the delivery of the liquid fuel by the fuel reservoir.

In one of the embodiments, the wicking structure held within the container conforms in shape substantially to the cavity of the container.

It is desirable to minimize the volume effectively occupied by the wicking structure inside the container by minimizing the solid volume of the wicking structure in order to maximize the amount of liquid fuel held in the container. Alternatively, to maximize the amount of liquid fuel held in the container, it is desirable to minimize the wicking material volume. The "solid volume" of the wicking structure is the volume occupied by the solid material of the wicking structure. In other words, the "solid volume" is the external volume of the wicking structure minus its void volume. The "wicking material volume" or the "volume of the wicking structure" is the sum of the solid volume and the volume of wicking pores in the wicking material. The wicking material volume is preferably no more than about 50%, more preferably no more than about 25%, and most preferably no more than about 10%, of the volume of the cavity within the container. The void volume of the wicking material is preferably at least about 50%, more preferably about 65% to 98%, and most preferably about 70% to 85%, of the external volume of the wicking material.

In an embodiment which minimizes the solid volume occupied by the wicking structure, the wicking structure volume is minimized by providing a wicking structure that extends to the extreme parts of the cavity within the container with the central portion of the cavity substantially devoid of the wicking structure either by making the wicking structure with no or only a minimal amount of wicking material in the central portion of the wicking structure or by substantially perforating the central portion of the wicking structure. With the wicking structure occupying at least the extreme parts of the cavity, all the liquid fuel in the cavity maintains, regardless of orientation. fluid communication with the outlet passageway of the container at least via capillarity. By reducing the amount of the wicking material in the central portion of the wicking structure to a minimum, the wicking structure volume is minimized and, consequently, the amount of the liquid fuel that the fuel reservoir can hold can be maximized. For instance, if the cavity within the container is planar having a square or rectangular shape and eight corners, the wicking structure is disposed at least at or proximate the eight extreme corners of the cavity. If the cavity is planar with the square or rectangular shape, the wicking structure can have a configuration of a square or rectangular sheet with a plurality of perforations, a square or rectangular rim, or a configuration shaped like the alphabet letters "E", "H", "K", "M", "N", "X" or "Z". On the other hand, if the cavity within the container is planar having a round or oval shape, the wicking structure is disposed at least as a circular or oval ring along the curved edge of the cavity.

The container of the fuel reservoir may take various shapes, such as a generally cylindrical cartridge comparable in size and shape to disposable dry cell batteries, or other known battery cartridge shapes. Alternatively, and particularly preferred, the container may form a generally planar thin pouch, packet or envelope having flexible top and bottom faces. The envelope may be formed from one or more sheets of a flexible plastic film or a plastic-coated film that are heat sealed or ultra-sonic welded together at the side edges of the sheets. Such an envelope container is flexibly bendable when filled with liquid fuel, and the wicking structure into which at least a portion of the liquid fuel has wicked retains such liquid and permits metering or delivering of such liquid when the container is so bent. A removable tape may be supplied to cover the outlet passageway when the envelope container is shipped or stored prior to use.

A liquid delivery means, such as a pump or a wick, can communicate with the outlet passageway of the fuel reservoir to deliver the liquid fuel out of the container through the outlet passageway Alternatively, the liquid fuel can flow out of the container via the outlet passageway under the force of gravity. The liquid fuel leaving the container can he delivered to an anode of a liquid fuel cell by gravity or preferably by the action of the liquid delivery means. In one of the embodiments, for instance, the liquid fuel can be delivered to the anode using a wick having differential capillarity with the capillarity in the wick greater nn the part proximate the anode than the part proximate the outlet passageway. The liquid fuel can optionally be delivered to the anode by a series of wicks connected together having different capillarities to generate a capillarity gradient in order to direct the flow of the liquid fuel from the outlet passageway to the anode. If the container is made of a rigid material, an air inlet having a one-way valve is provided to the container to permit gas flow into the volume of the container as the liquid fuel exits the container through the outlet passageway. If the container is made of a flexible material, e.g. if the container is a flexible pouch an air inlet is optional.

A further embodiment of the invention is a wicking material for a fuel reservoir for a liquid fuel cell formed from a wicking structure of foam, bundled fibers or nonwoven fibers. Preferably, the wicking structure is constructed from a wicking material selected from polyurethane foams (preferably felted polyurethane foams, reticulated polyurethane foams or felted reticulated polyurethane foams), melamine foam, and nonwoven felts or bundles of polyamide such as nylon, polypropylene, polyester such as polyethylene terephthalate, cellulose, polyethylene, polyacrylonitrile, and mixtures thereof. The wicking structure made from such wicking material not only wicks and retains liquids, but permits liquids to be controllably metered or delivered out from such structure. The free rise wick height (a measure of capillarity) of the wicking structure preferably is greater than at least one half of the longest dimension. Most preferably, the free rise wick height is greater than the longest dimension.

In a particularly preferred embodiment, the wicking material has a capillarity gradient, such that the flow of the liquid fuel is directed from one region of the material to another region of the material as a result of the differential in capillarity between the two regions. Alternatively, the wicking material may be formed as a composite of individual structures of the same or different materials with distinctly different capillarities.

If a polyurethane foam is selected for the wicking material, such foam should have a density in the range of 0.5 to 25 pounds per cubic foot, and pore sizes in the range of 10 to 200 pores per linear inch, preferably a density in the range of 0.5 to 15 pounds per cubic foot and pore sizes in the range of 40 to 200 pores per linear inch, most preferably a density in the range of 0.5 to 10 pounds per cubic foot and pore sizes in the range of 75 to 200 pores per linear inch.

If a felted polyurethane foam is selected for the wicking material, such as a felted reticulated polyurethane foam, such foam should have a density in the range of 2 to 45 pounds per cubic foot and a compression ratio in the range of 1.1 to 30, preferably a density in the range of 3 to 15 pounds per cubic foot and compression ratio in the range of 1.1 to 20, most preferably a density in the range of 3 to 10 pounds per cubic foot and compression ratio in the range of 2.0 to 15.

The fuel reservoir of the present invention can hold a liquid fuel for an indirect or direct fuel cell. Examples of the liquid fuel that the fuel reservoir can hold for a direct fuel cell are methanol, ethanol, ethylene glycol, dimethoxymethane, trimethoxymethane, formic acid or hydrazine. The liquid fuel that the fuel reservoir can hold for indirect fuel cells or reformers includes liquid hydrocarbons, such as methanol, petroleum and diesel fuel. The fuel reservoir of the present invention preferably contains methanol as the liquid fuel. The methanol in the fuel reservoir is an aqueous mixture of methanol or, preferably, pure methanol. The methanol concentration of the aqueous mixture is preferably at least about 3%, preferably at least about 5%, more preferably at least about 25%, even more preferably at least about 50%, further even more preferably at least about 60%, and most preferably about 70% to about 99%, e.g. about 85%, 90%, 95% or 99%, with the methanol concentration percentage expressed on a weight-to-weight basis.

## Description of the Figures

FIG. 1 is a front elevational view partially broken away of a prior art fuel cartridge for a liquid fuel cell;

FIG. 2 is a front elevational view of a liquid fuel reservoir for a fuel cell according to the invention;

FIG. 3 is a right side elevational view partially broken away of the liquid fuel reservoir of FIG. 2;

FIG. 4 is a top plan view of the liquid fuel reservoir of FIGs. 2 and 3;

FIG. 5 is a front elevational view of an alternative liquid fuel reservoir for a fuel cell according to the invention;

FIG. 6 is a right side elevational view partially broken away of the alternative liquid fuel reservoir of FIG. 5;

FIG. 7 is a front elevational view of an alternative liquid fuel reservoir having no air inlet for a fuel cell according to the invention;

FIG. 8 is a right side elevational view partially broken away of the alternative liquid fuel reservoir of FIG. 7;

FIG. 9 is a front elevational view of an alternative liquid fuel reservoir having a liquid fuel introduction inlet **56** containing a valve **58** for a fuel cell according to the invention;

FIG. 10 is a right side elevational view partially broken away of the alternative liquid fuel reservoir of FIG. 9;

FIG. 11 is a front elevational view of an alternative liquid fuel reservoir having a liquid fuel introduction inlet **57** sealed by a membrane **59** made preferably of rubber for a fuel cell according to the invention;

FIG. 12 is a right side elevational view partially broken away of the alternative liquid fuel reservoir of FIG. 11;

FIG. 13 is a schematic diagram of a liquid fuel reservoir viewed from the front with the volume of the wicking structure minimized according to the invention;

FIG. 14 is a schematic diagram of a liquid fuel reservoir viewed from the front with the volume of the wicking structure minimized according to the invention;

FIG. 15 is a schematic diagram of a liquid fuel reservoir viewed from the front with the volume of the wicking structure minimized according to the invention;

FIG. 16 is a schematic diagram of a liquid fuel reservoir viewed from the front with the volume of the wicking structure minimized according to the invention;

FIG. 17 is a schematic diagram of a liquid fuel reservoir viewed from the front with the volume of the wicking structure minimized according to the invention;

FIG. 18 is a schematic diagram of a liquid fuel reservoir viewed from the front with the volume of the wicking structure minimized according to the invention;

FIG. 19 is a schematic diagram of a liquid fuel reservoir viewed from the front with the volume of the wicking structure minimized according to the invention:

FIG. 20 is a schematic diagram of a liquid fuel reservoir viewed from the front with the volume of the wicking structure minimized according to the invention;

FIG. 21 is a schematic diagram of a recyclable or rechargeable liquid fuel reservoir with a liquid fuel outlet **78** having a sealable cap **82** containing a membrane **84** preferably made of rubber according to the invention;

FIG. 22 is a schematic diagram of a recyclable or rechargeable liquid fuel reservoir having a valve **86** in a liquid fuel outlet **88** according to the invention;

FIG. 23 is a schematic diagram of an arrangement of delivering liquid fuel from a fuel reservoir of the invention to the anode of a fuel cell by capillarity.

FIG. 24 is a schematic diagram of a wedge of wicking material prior to felting; and

FIG. 25 is a schematic diagram of the wicking material of FIG. 24 after felting.

## Description of the Preferred Embodiments

Referring first to FIGs. 2 to 4, a cartridge container **20** defines a cavity holding a liquid fuel mixture **22.** An outlet tube **24** extends into the container **20** through a cover **28** and the outlet tube **24** communicates between the cavity of the container **20** and outside of the container. An air inlet tube **26** also extends into the container **20** through cover **28**. The air inlet tube **26** may include a one way valve (not shown) so as to prevent liquid from flowing from the container **20.**

A wicking structure **32** is provided within the cavity of the container **20**. The wicking structure **32** surrounds the open end of the outlet tube **24** within the cavity of the container **20**. Liquid fuel wicks into the wicking structure **32.**

In the embodiment shown in FIGs. 2 to 4, the wicking structure is a felted polyurethane foam shaped as a rectangular cube or box. For example, the structure is approximately 10 mm (width) $\times$ 5 mm (thickness) $\times$ 90 (height) mm, with the 90 mm height as the longest dimension of the structure.

The foam was produced with the following mix:

| Arcol 3020 polyol (from Bayer Corp.) | 100 parts |
| Water | 4.7 |
| Dabco NEM (available from Air Products) | 1.0 |
| A-1 (available for OSi Specialties/Crompton) | 0.1 |
| Dabco T-9 (available from Air Products) | 0.17 |
| L-620 (available from OSi Specialities/Crompton) | 1.3 |

After mixing for 60 seconds and allowed to degas for 30 seconds, 60 parts of toluene diisocyanate were added, This mixture was mixed for 10 seconds and then placed in a 15" × 15" × 5" box to rise and cure for 24 hours. The resulting foam had a density of 1.4 pounds per cubic foot and a pore size of 85 pores per linear inch. The foam was felted by applying heat (360°F) and pressure sufficient to compress the foam to 1/5 of its original thickness (*i.e.*, compression ratio = 5). The heat and compressive pressure were applied for about 30 minutes. The felted foam had a density of 7.0 pounds per cubic foot.

The container **20** is filled with 6 ml. of an aqueous fuel solution containing 95% methanol. The cover **18** to the container comprises a cap with a rubber serum stopper **34.**

A pump **30** acts on the outlet tube **24** and draws liquid fuel **22** from the wicking structure **32** through the outlet tube **24.** Only a slight vacuum needs to be placed on the outlet tube **24** to draw the fuel mixture out of the container. Fuel may be drawn out regardless of the orientation of the container. In one test, with the container in its "vertical" orientation as shown In FIGs. 2 to 4, 5.0 ml of liquid fuel were drawn out of the fuel reservoir for a fixed pump setting. In a second test, with the container in an "upside-down" orientation (not shown), more than 2.0 ml of liquid fuel were drawn from the fuel reservoir at the same pump setting. While the "upside-down" orientation causes less efficient fuel delivery, fuel delivery was not interrupted, as would be the case for other fuel reservoirs.

In an alternate embodiment (not shown), the wicking structure was selected as a non-woven polyester fiber pad shaped into a rectangular cube or box of approximately 10 mm × 5 mm × 90 mm. The non-woven pad was formed by mixing together bulk fiber (polyester and melt-binder coated sheathed polyester) and forming the mixture with a combed roller into a layer. The layer was removed from the roller with a moving comb and transferred to a conveyor belt. The conveyor belt fed the material to an articulated arm that stacked multiple layers onto a separate conveyor belt. The multiple layers were heated and compressed to the desired final thickness. Similar fuel delivery was achieved with this non-woven polyester fiber wicking structure.

In a further alternate embodiment (not shown), the wicking structure comprised a needled felt. A blend of recycled polyester, polypropylene and nylon fibers were fiber-separated and a comb roller pulled a layer of fiber. The layer was removed from the roller with a moving comb and transferred to a conveyor belt. The conveyor belt fed the material to an articulated arm that stacked multiple layers onto a separate conveyor belt. The multiple layers (with a combined thickness of about 10 inches) were fed through two needling operations in which a bank of barbed needles compact the multiple layers together. Needling also forced some fibers to be pulled through the sample to entangle and hold the final shape of the needled felt together. Similar fuel delivery was achieved with a wicking structure formed as a rectangular cube of the needled felt.

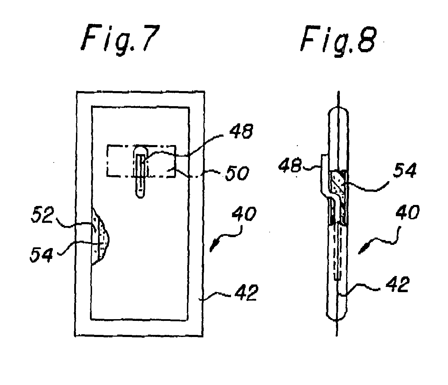

Referring next to FIGs. 5 and 6, an alternate container of flexible packaging for a fuel reservoir is shown. The flexible fuel delivery pouch, packet or envelope **40** comprises one or more sheets connected together to form the pouch, packet or envelope with sealed edges **42.** Preferably, the sheets are connected by heat-sealing or ultra-sonic welding. The envelope **40** defines a central volume forming a reservoir for a liquid fuel **52** for a fuel cell. An air inlet **44** is provided with a one way valve **46** to prevent liquid fuel from draining from the envelope **40**. The air inlet **44** provides a passageway for air to enter the volume of the envelope as liquid fuel is drawn therefrom.

An outlet tube **48** is provided through the envelope **40.** The outlet tube is in fluid communication between the interior volume of the envelope and the fuel cell. Prior to use, the outlet tube **48** may be covered with a covering tape **50,** which is shown in phantom outline in FIG. 5. The tape covers the opening of the outlet tube **48.** In this way, a pre-filled fuel reservoir may be shipped and stored without leakage of liquid fuel therefrom. The tape **50** is removed when the envelope is installed for use to fuel a fuel cell.

A wicking structure **54,** formed from materials noted above with respect to the embodiment in FIGs. 2 to 4, is held within the volume of the envelope **40.** Just as with the first embodiment, a pump (not shown in FIGs. 5 and 6) is used to draw liquid fuel from the interior volume of the container through the outlet tube **48**. And like the first embodiment, efficient fuel delivery is independent of the orientation of the envelope and the wicking structure.

Preferably, the wicking structure **54** conforms in dimension to the interior volume of the envelope **40.** Because the wicking structure 54 preferably is flexible, and the envelope **40** preferably is formed from flexible film materials, the entire fuel cell delivery system may be bent or flexed for various positions and configurations when in use. Moreover, the envelope **40** in this preferred embodiment is lightweight and formed with substantially planar top and bottom surfaces.

Referring to FIGs. 7 and 8, another flexible fuel reservoir is shown. The fuel reservoir according to FIGs. 7 and 8 is similar to the flexible fuel reservoir of FIGs. 5 and 6 except for the absence of the air inlet **44** and the one way valve **46** as the flexible pouch can collapse as fuel is withdrawn.

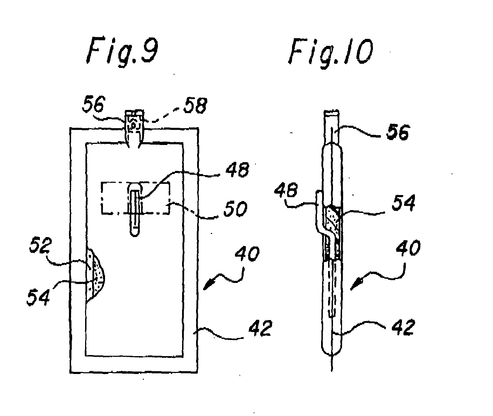

FIGs. 9 and 10 illustrate another flexible fuel reservoir of the present invention. The flexible fuel reservoir of FIGs. 9 and 10 is similar to the flexible fuel reservoir according to FIGs. 7 and 8 except for the presence of a liquid fuel inlet **56** having a valve **58** for the introduction of liquid fuel into the flexible pouch in order to replenish the flexible fuel reservoir with liquid fuel making the fuel reservoir recyclable.

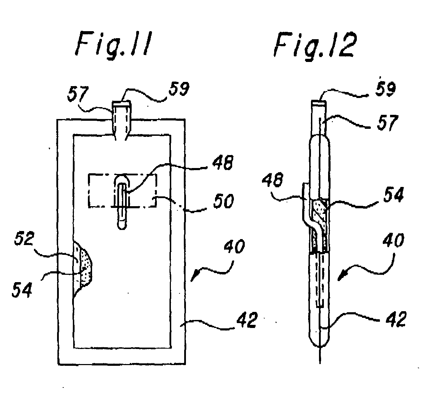

FIGs. 11 and 12 illustrate another recyclable, flexible fuel reservoir of the present invention. The recyclable, flexible fuel reservoir of FIGs. 11 and 12 is similar to the flexible fuel reservoir according to FIGs. 9 and 10 except for the presence of a liquid fuel inlet **57** sealed with a membrane **59** preferably made of rubber for the introduction of fresh liquid fuel by a syringe or the like into the flexible pouch after some or all of the original liquid fuel has been discharged from the reservoir in order to replenish the spent fuel reservoir with liquid fuel making the fuel reservoir recyclable. Upon puncture, the membrane allows the introduction of the liquid fuel into the cavity, and after liquid fuel introduction the membrane reseals the cavity.

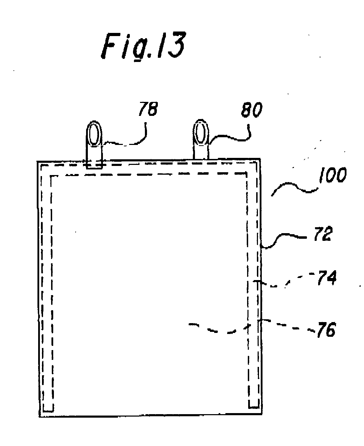

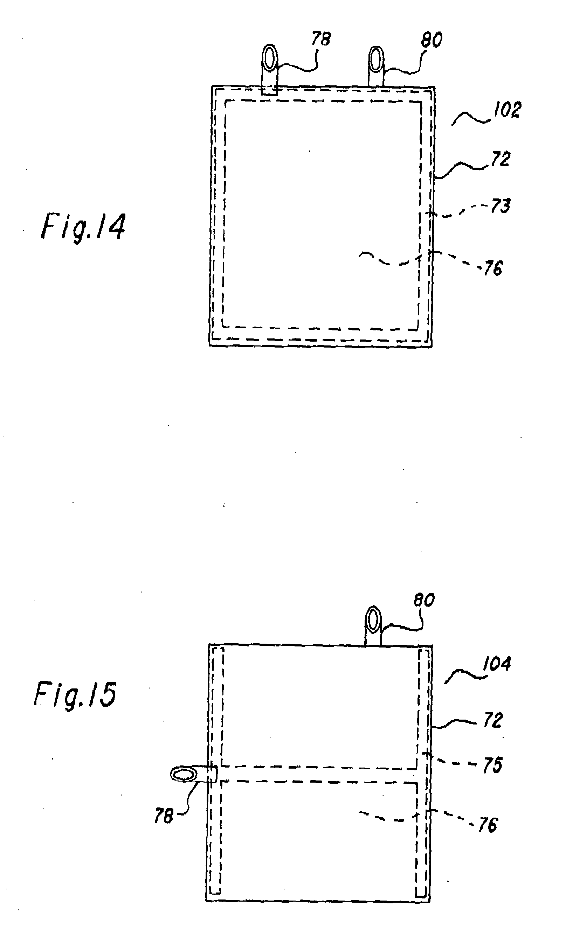

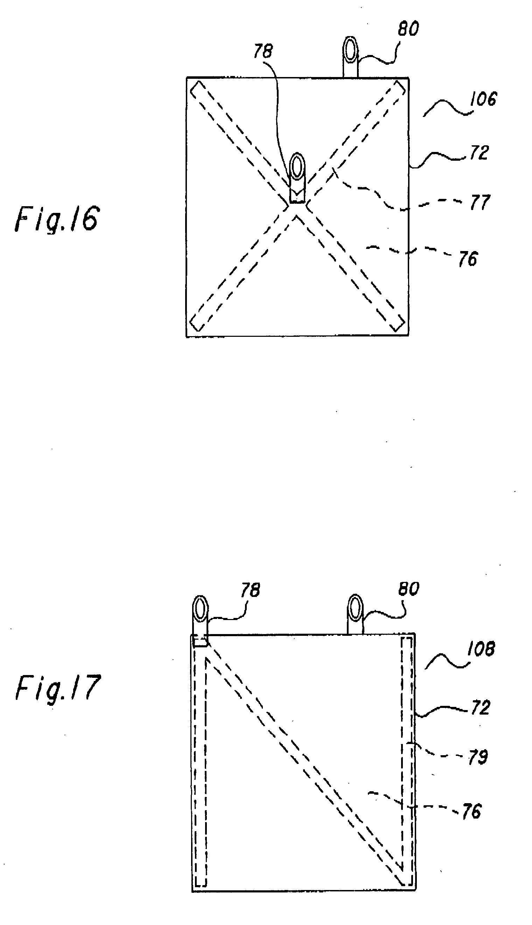

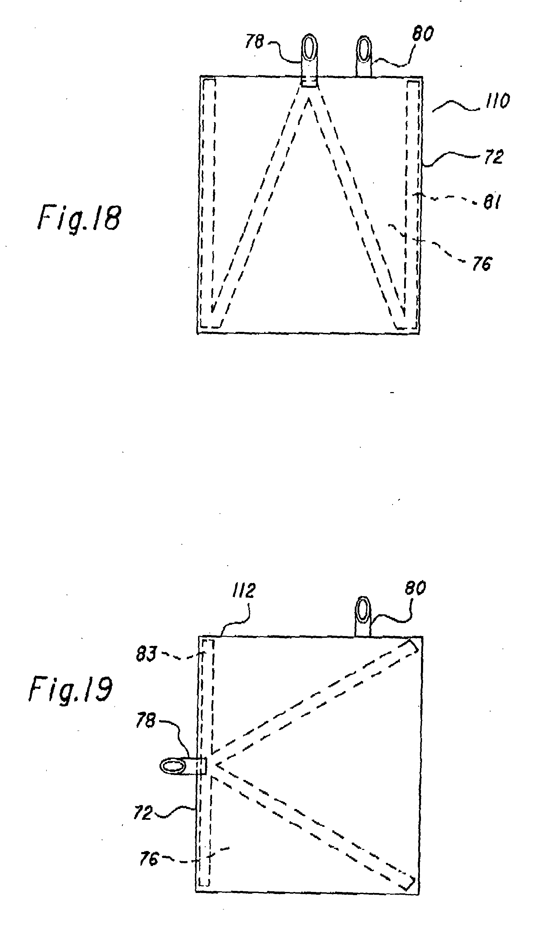

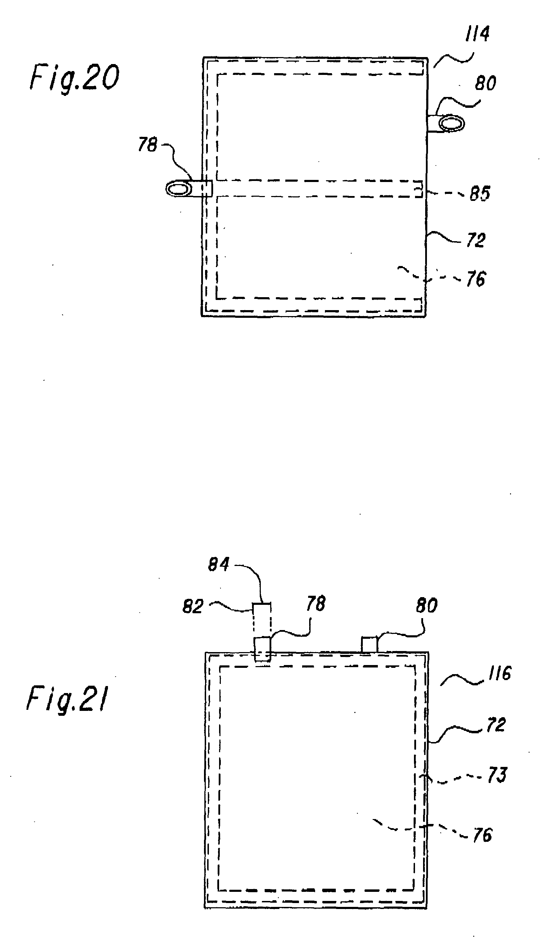

Referring to FIGs. 13 through 20, several embodiments of fuel reservoirs **100, 102, 104, 106, 108, 110, 112** and **114** with the volume of the wicking structures **73, 74, 75, 77, 79, 81, 83** and **85** minimized are shown. Each of the fuel reservoirs comprises a container **72** defining a cavity **76** having a wicking structure **73, 74, 75, 77, 79, 81, 83** or **85,** a liquid fuel outlet passageway **78** and an optional air inlet **80** (depending on whether the container **72** is made of a rigid material). The wicking structures **73, 74, 75, 77, 79, 81, 83** and **85** of these fuel reservoirs occupy at least the extreme parts of the cavity **76.** The wicking structure can have a 3-sided configuration (see FIG. 13), square or rectangular configuration (see FIG. 14) or a configuration in the shape of an alphabet letter "H", "X", "N", "M", "K" or "E" (see FIGs. 15-20, respectively).

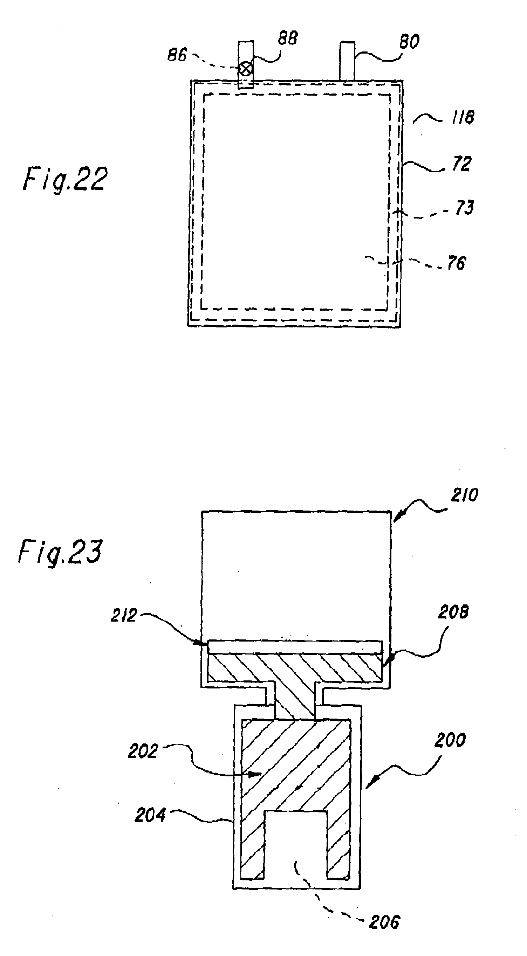

FIG. 21 schematically shows an embodiment of a recyclable fuel reservoir according to the present invention. The recyclable fuel reservoir **116** comprises a container **72,** wicking structure **73,** cavity **76,** an optional air inlet **80** and a liquid fuel outlet **78** having a sealable cap **82** and a membrane **84** preferably made of rubber on the sealable cap. After some or all of the original liquid fuel has been discharged from the fuel reservoir, the fuel reservoir can be disconnected from the fuel cell, the opening of the liquid fuel outlet **78** can then be sealed with the sealable cap **82** and fresh liquid fuel can be injected through the membrane **84** to replenish the spent fuel reservoir with liquid fuel.

FIG. 22 is a schematic view of another embodiment of a recyclable fuel reservoir according to the present invention. The recyclable fuel reservoir **118** comprises a container **72,** wicking structure **73,** cavity **76,** an optional air inlet **80** and a liquid fuel outlet **88** having a valve **86.** After some or all of the original liquid fuel has been discharged from the fuel reservoir, the valve **86** can be closed and the fuel reservoir is disconnected from the fuel cell. Fresh liquid fuel can be introduced into the spent fuel reservoir through the valve **86** to replenish the spent fuel reservoir with liquid fuel to make the fuel reservoir recyclable or rechargeable.

FIG. 23 schematically shows an embodiment in which a swappable fuel reservoir **200** of the present invention is connected to the anode **212** of a fuel cell **210** via a fuel delivery wick **208.** The swappable fuel reservoir **200** comprises a container **204** defining a cavity **206,** which contains a wicking structure **202.** The wicking structure **202** of the fuel reservoir **200** is in contact with the fuel delivery wick **208.** The capillary of the fuel delivery wick **208** is greater than the capillary of the wicking structure **202** so that a capillary gradient is created to deliver liquid fuel from the fuel reservoir **200** to the anode **212** of the fuel cell **210.**

In a particularly preferred embodiment, the wicking structure is made with a foam with a capillarity gradient, such that the flow of the liquid fuel is directed from one region of the structure to another region of the structure as a result of the differential in capillarity between the two regions. One method for producing a material with a capillarity gradient is to felt a foam to varying degrees of compression along its length. Another method for producing a material with a capillarity gradient is to assemble a composite of individual components with distinctly different capillarities. The direction of capillarity flow of liquid is from a lower capillarity region to a higher capillarity region.

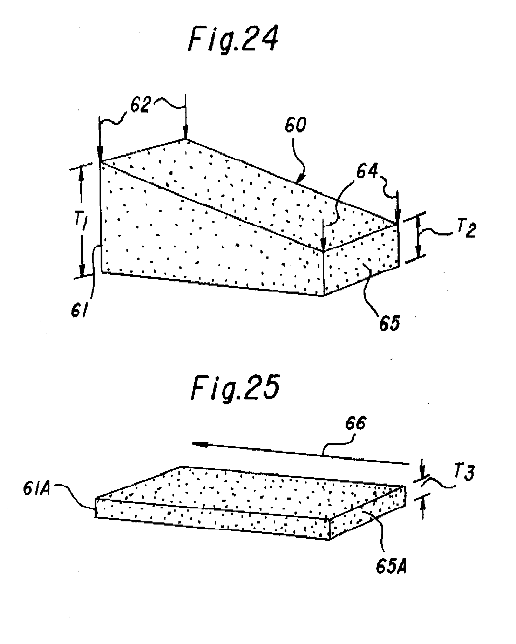

FIGs. 24 and 25 illustrate schematically a method for making a wicking material, such as foam, with a capillarity gradient. As shown in FIG. 24, a wedge-shaped slab **60** of foam of consistent density and pore size has a first thickness **T1** at a first end **61** and a second thickness **T2** at a second end **65.** The slab **60** is subjected to a felting step -- high temperature compression for a desired time to compress the slab **60** to a consistent thickness **T3,** which is less than the thicknesses **T1** and **T2.** A greater compressive force, represented by arrows **62,** is required to compress the material from **T1** to **T3** at the first end **61** than is the compressive force, represented by arrows **64** required to compress the material from **T2** to **T3** at the second end **65.**

The compression ratio of the foam material varies along the length of the felted foam shown in FIG. 25, with the greatest compression at the first end **61A** (**T1** to **T3**) as compared with the second end **65A** (**T2** to **T3**). The capillary pressure is inversely proportional to the effective capillary radius, and the effective capillary radius decreases with increasing firmness or compression. Arrow **66** in FIG. 25 represents the direction of capillary flow from the region of lower felt firmness or capillarity to higher felt firmness or capillarity. Thus, if a wicking material or wicking structure is formed with a material or composite material having a capillarity gradient, the liquid fuel wicked into the material may be directed to flow from one region of the material with lower compression ratio to another region with higher compression ratio.

The invention has been illustrated by detailed description and examples of the preferred embodiments. Various changes in form and detail will be within the skill of persons skilled in the art. Therefore, the invention must be measured by the claims and not by the description of the examples or the preferred embodiments.

**Claims**

**1.** A fuel reservoir for a liquid fuel cell, comprising:

(a) a container having a wall and an interior defining a cavity holding a liquid fuel for the liquid fuel cell;

(b) a wicking structure disposed within the cavity and into which at least a portion of the liquid fuel wicks and from which the liquid fuel may subsequently be delivered, wherein substantially all of the free liquid fuel in the container is contactable by the wicking structure, wherein the wicking structure has a longest dimension and the free rise wick height of the wicking structure is greater than at least one half of the longest dimension; and

(c) an outlet that provides fluid communication of the wicking structure through the wall of the container to a location exterior of the container,

wherein the fuel reservoir is selectively detachable from or attachable to a liquid fuel cell.

**2.** The fuel reservoir of claim 1, wherein the free rise wick height of the wicking structure is greater than the longest dimension.

**3.** The fuel reservoir of claim 2, wherein the wicking structure comprises a wicking material selected from the group consisting of foams, bundled fibers, matted fibers, woven fibers, nonwoven fibers and inorganic porous materials.

**4.** The fuel reservoir of claim 1, wherein the wicking structure comprises a wicking material selected from the group consisting of foams, bundled fibers, matted fibers, woven fibers and nonwoven fibers.

**5.** The fuel reservoir of claim 4, wherein the wicking material is selected from the group consisting of polyurethane foam, melamine foam, nonwoven felts of polyamide, polyethylene, polypropylene, polyester, polyacrylonitrile, or mixtures thereof, bundled, matted or woven fibers of cellulose, polyester, polyethylene, polypropylene and polyacrylonitrile, or mixtures thereof.

**6.** The fuel reservoir of claim 5, wherein the polyurethane foam is a felted polyurethane foam, reticulated polyurethane foam or felted reticulated polyurethane foam, the polyamide is nylon and the polyester is polyethylene terephthalate.

**7.** The fuel reservoir of claim 6, wherein the wicking material is selected from the group consisting of a felted polyurethane foam, reticulated polyurethane foam and felted reticulated polyurethane foam.

**8.** The fuel reservoir of claim 4, wherein the wicking structure comprises a polyurethane foam with a density In the range of about 0.5 to about 45 pounds per cubic foot and pore sizes in the range of about 10 to about 200 pores per linear inch.

**9.** The fuel reservoir of claim 8, wherein the wicking structure comprises a polyurethane foam with a density in the range of 0.5 to 15 pounds per cubic foot end pore sizes in the range of 40 to 200 pores per linear inch.

**10.** The fuel reservoir of claim 4, wherein the wicking structure is a felted reticulated polyurethane foam with a density in the range of 2 to 45 pounds per cubic foot and a compression ratio in the range of 1.1 to 30.

**11.** The fuel reservoir of claim 1, wherein the wicking structure has a capillarity gradient.

**12.** The fuel reservoir of claim 11, wherein the wicking structure comprises two or more components, wherein at least two of such components have different capillarities.

**13.** The fuel reservoir of claim 11, wherein the wicking structure comprises a foam felted to varying degrees of compression along a length of the foam.

**14.** The fuel reservoir of claim 11, wherein the capillarity is greatest at a portion of the wicking structure proximate the outlet, and a distal portion of the wicking structure is of lesser capillarity.

**15.** The fuel reservoir of claim 1, further comprising:

a liquid delivery means in fluid communication with the outlet to deliver the liquid fuel out of the container through the outlet to the location exterior of the container.

**16.** A combination comprising the fuel reservoir of claim 15 and an anode of a liquid fuel cell, wherein the liquid delivery means is in fluid communication with the anode.

**17.** The combination of claim 16, wherein the liquid delivery means is a wick, said wick delivering the liquid fuel to the anode.

**18.** The combination of claim 16, wherein the liquid delivery means is a wick, said wick being in contact with a wicking link In fluid communication with the anode, said wicking link comprising at least a second wick, wherein said wick and said wicking link form a capillarity gradient that directs the liquid fuel to flow from the outlet to the anode.

**19.** The fuel reservoir of claim 1, further comprising:

an air inlet through the container, said air inlet having a one-way valve to permit gas flow into the cavity of the container.

**20.** The fuel reservoir of claim 1, wherein the container has flexible sidewalls.

**21.** The fuel reservoir of claim 20, wherein the container comprises an envelope formed from one or more sheets of a plastic film or a plastic-coated film.

**22.** The fuel reservoir of claim 21, further comprising a removable tape that covers the outlet passageway when the container is shipped or stored prior to use.

**23.** The fuel reservoir of claim 21, wherein the container is flexibly bendable.

**24.** The fuel reservoir of claim 21, wherein the envelope has a first face and a second face and said first and second faces are substantially planar.

**26.** The fuel reservoir of claim 1 which is recyclable, wherein the outlet has a valve that allows liquid fuel to be introduced into the cavity.

**27.** The fuel reservoir of claim 1 which is recyclable, wherein the outlet has a sealable cap that allows liquid fuel to be introduced into the cavity.

**28.** The fuel reservoir of claim 27, wherein the sealable cap has a membrane that upon puncture allows the introduction of the liquid fuel into the cavity, and after liquid fuel introduction the membrane reseals the cavity.

**29.** The fuel reservoir of claim 28, wherein the membrane comprises rubber.

**30.** The fuel reservoir of claim 12, wherein the wicking structure comprises first and second components, said first component having a higher capillarity than the second component, wherein said first component has a longest dimension, and the free rise wick height of the first component Is greater than one half of the longest dimension of said first component.

**31.** The fuel reservoir of claim 30, wherein the free rise wick height of the first component is greater than the longest dimension of said first component,

**32.** The fuel reservoir of claim 1, wherein the wicking structure is made of a permanently compressed wicking material.

**33.** The fuel reservoir of claim 1, wherein the wicking structure is made of a reversibly compressed wicking material.

**34.** The fuel reservoir of claim 1, wherein the wicking structure has a wicking structure volume and the wicking structure volume is no more than about 50% of a volume of the cavity.

**35.** The fuel reservoir of claim 34, wherein the wicking structure volume is no more than about 25% of the volume of the cavity.

**36.** The fuel reservoir of claim 35, wherein the wicking structure volume is no more than about 10% of the volume of the cavity.

**37.** The fuel reservoir of claim 1, wherein the wicking structure has an external volume and the void volume of the wicking structure is at least about 50% of the external volume of the wicking structure.

**38.** The fuel reservoir of claim 37, wherein the void volume of the wicking structure is about 65% to about 98% of the external volume of the wicking structure.

**39.** The fuel reservoir of claim 38, wherein the void volume of the wicking structure is about 70% to about 85% of the external volume of the wicking structure.

**40.** The fuel reservoir of claim 39, wherein the void volume of the wicking structure is about 75% of the external volume of the wicking structure.

**41.** The fuel reservoir of claim 40, wherein the void volume of the wicking structure is about 80% of the external volume of the wicking structure.

**42.** The fuel reservoir of claim 41, wherein the void volume of the wicking structure is about 85% of the external volume of the wicking structure.

**43.** The fuel reservoir of claim 1, wherein the liquid fuel comprises methanol.

**44.** The fuel reservoir of claim 1, wherein the liquid fuel is pure methanol.

**45.** The fuel reservoir of claim 1, wherein the liquid fuel is an aqueous mixture of methanol.

**46.** The fuel reservoir of claim 45, wherein the methanol concentration of the aqueous mixture is at least 25% by weight.

**47.** The fuel reservoir of claim 46, wherein the methanol concentration of the aqueous mixture is at least 50% by weight.

**48.** The fuel reservoir of claim 47, wherein the methanol concentration of the aqueous mixture is about 70% to 99% by weight.

**49.** The fuel reservoir of claim 48, wherein the methanol concentration of the aqueous mixture is about 90% by weight.

**50.** The fuel reservoir of claim 49, wherein the methanol concentration of the aqueous mixture is about 95% by weight.

**51.** The fuel reservoir of claim 50, wherein the methanol concentration of the aqueous mixture Is about 99% by weight.

**52.** The fuel reservoir of claim 15, wherein the liquid delivery means is a pump or a wick having greater capillarity than the wicking structure.

**53.** The fuel reservoir of claim 52, wherein the liquid delivery means is the pump.

**54.** The fuel reservoir of claim 52, wherein the liquid delivery means is the wick.

**55.** The combination of claim 16, wherein the liquid delivery means is a pump or a wick having greater capillarity than the wicking structure.

**56.** A fuel reservoir for a liquid fuel cell, comprising:

(a) a container having a wall and an Interior defining a cavity holding a liquid fuel for the liquid fuel cell;
(b) a wicking structure disposed within the cavity and into which at least a portion of the liquid fuel wicks and from which the liquid fuel may subsequently be delivered, wherein substantially all of the free liquid fuel in the container is contactable by the wicking structure, wherein the wicking structure has a longest dimension and the free rise wick height of the wicking structure is greater than at least one half of the longest dimension;
(c) an outlet that provides fluid communication of the wicking structure through the wall of the container to a location exterior of the container; and
(d) a liquid delivery means interspersed between the outlet and the location exterior of the container, wherein the liquid delivery means delivers the liquid fuel from the outlet to the location exterior of the container.

**57.** A fuel reservoir for a liquid fuel cell, comprising:

(a) a container having a flexible wall and an interior defining a cavity holding a liquid fuel for the liquid fuel cell;
(b) a wicking structure disposed within the cavity and into which at least a portion of the liquid fuel wicks and from which the liquid fuel may subsequently be delivered, wherein substantially all of the free liquid fuel in the container is contactable by the wicking structure, wherein the wicking structure has a longest dimension and the free rise wick height of the wicking structure is greater than at least one half of the longest dimension; and
(c) an outlet that provides fluid communication of the wicking structure through the wall of the container to a location exterior of the container.

**58.** A combination, comprising:

(i) a recyclable fuel reservoir, wherein said recyclable fuel reservoir comprises

(a) a container having a wall and an interior defining a cavity holding a liquid fuel for the liquid fuel cell;
(b) a wicking structure disposed within the cavity and into which at least a portion of the liquid fuel wicks and from which the liquid fuel may subsequently be delivered, wherein substantially all of the free liquid fuel in the container is contactable by the wicking structure, wherein the wicking structure has a longest dimension and the free rise wick height of the wicking structure is greater than at least one half of the longest dimension; and
(c) an outlet that provides fluid communication of the wicking structure through the wall of the container to a location exterior of the container, said outlet having a valve or a sealable cap containing a membrane, wherein the membrane can be punctured by a needle for liquid fuel introduction and the membrane seals the cavity after the liquid fuel introduction; and

(ii) a liquid fuel cell comprising an anode,

wherein the anode is in fluid communication with the outlet of the recyclable fuel reservoir.

Fig.4.

Fig.1.
(Prior Art)

Fig.2.

Fig.3.

Fig.5.

Fig.6.

Fig.7

Fig.8

## Fig.9

## Fig.10

# Fig.11

# Fig.12

## Fig.13

*Fig.14*

*Fig.15*

Fig.16

Fig.17

Fig.18

78    80

110

72

81

76

Fig.19

112

83

78

80

72

76

Fig.20

Fig.21

*Fig.22*

*Fig.23*

## Fig.24

## Fig.25